# EUROPEAN PATENT SPECIFICATION

(11) **EP 2 199 108 B1**
(45) Date of publication and mention of the grant of the patent: **14.05.2014**
(21) Application number: 09179757.1
(22) Date of filing: 17.12.2009
(51) Int. Cl.: B60C 9/26

(54) **Pneumatic tire**
Luftreifen
Pneu

(30) Priority: 19.12.2008 US 139176 P; 22.09.2009 US 564380
(43) Date of publication of application: 23.06.2010
(73) Proprietor: The Goodyear Tire & Rubber Company, Akron, OH 44316-0001 (US)
(72) Inventor: Gillard, Jean-Michel Alphonse Fernand, B-6700, Arlon (BE); Krier, Roland Willibrord, L-6834, Biwer (LU)
(74) Representative: Kutsch, Bernd

(56) References cited:
- EP-A1- 1 477 333
- EP-A1- 1 714 800
- EP-A2- 0 887 208
- EP-A2- 1 518 666

## Description

### Field of Invention

This invention relates to a pneumatic tire having a carcass and a belt reinforcing structure, and, more particularly, to radial ply truck tires.

### Background of the Invention

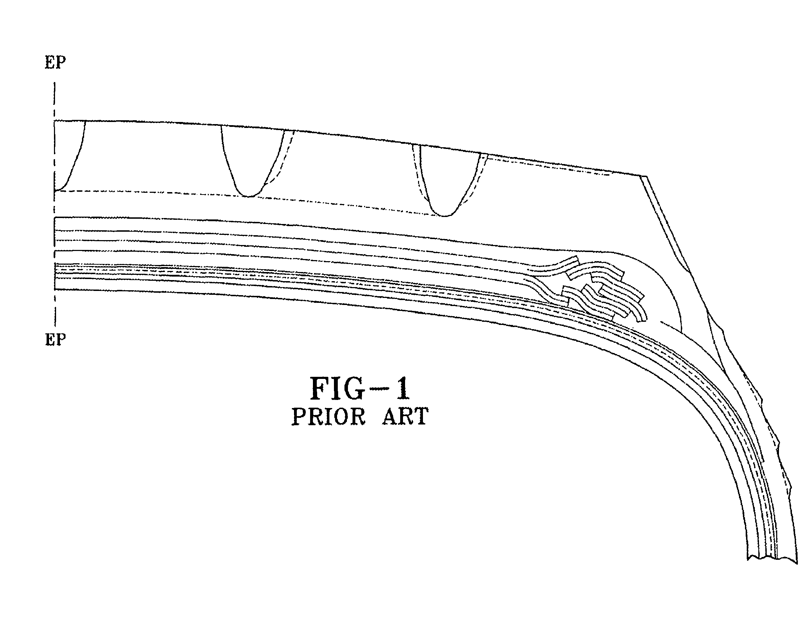

In tires that have heavy loads such as truck tires or aircraft tires, zigzag belt layers have been utilized for the belt package. An exemplary portion of a tire with a zigzag belt layer 5 is shown in Figure 1. The advantage of zigzag belt layers is that the belt edges are folded at the edges near the shoulder, which greatly improves tire durability. The disadvantage to zigzag belt layers is that at the edges near the shoulder, there may be too many overlapping layers. In some areas there may be for example, 4 or more layers, and even 6 or more layers in some locations. The reduction of overlapping strips in the shoulder area should help improve durability. Thus it is desired to have a tire with improved belt edge durability without excess weight.

EP-A- 1 714 800 describes a tire in accordance with the preamble of claim 1.

Tires comprising a zigzag belt layer are also described in EP 0 887 208 and EP-A- 1 518 666.

### Summary of the Invention

The invention relates to a tire according to claim 1.

Dependent claims refer to preferred embodiments of the invention.

In accordance with one example embodiment of the present invention, a pneumatic tire has a carcass and a belt reinforcing structure. The belt reinforcing structure includes a wavy belt layer having a first and second axially outer edge. The belt layer is formed of a strip of rubber shaped in a sine wave pattern extending from a first belt edge to a second belt edge. The belt structure further includes a circumferential belt layer. The circumferential belt layer may be formed of cords angled at 15 degrees or less or 10 degrees or less relative to the circumferential direction.

In accordance with one aspect of the invention, the amplitude of the strip wound circumferentially in a sine shaped manner forming the wavy belt layer having the sine wave pattern extending from the first edge to the second edge varies within the wavy belt layer between a minimum amplitude and a maximum amplitude, wherein the maximum amplitude defines the first and second axially outer edges, and wherein the minimum amplitude is less than the maximum amplitude, preferably less than 95 % of the maximum amplitude or in a range of from 80 % to 99%, alternatively 95% to 90%, of the maximum amplitude.

### Definitions

"Aspect ratio" of the tire means the ratio of its section height (SH) to its section width (SW) multiplied by 100% for expression as a percentage.

"Axial" and "axially" mean lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands which the plies in the tire comprise.

"Equatorial plane (EP)" means the plane perpendicular to the tire's axis of rotation and passing through the center of its tread.

"Innerliner" means the layer or layers of elastomer or other material that form the inside surface of a tubeless tire and that contain the inflating fluid within the tire.

"Net-to-gross ratio" means the ratio of the tire tread rubber that makes contact with the road surface while in the footprint, divided by the area of the tread in the footprint, including non-contacting portions such as grooves.

"Ply" means a continuous layer of rubber-coated parallel cords.

"Radial" and "radially" mean directions radially toward or away from the axis of rotation of the tire.

"sine wave, wavy belt reinforcing structure or wavy belt layer" means at least

one layer, preferably at least two layers, of cords or a strip of parallel cords having 2 to 20 or more cords in each strip and laid up in a sine wave pattern or zigzag pattern between the lateral edges of the belt layer.

### Brief Description of the Drawings

FIG. 1 is a schematic sectional view of part of a prior art tire having a zigzag belt;
FIG. 2 illustrates a comparative example of a partial cross-section of an exemplary radial tire 10;
FIG. 3 is an example of a tire building drum laid out circumferentially for illustration purposes illustrating the cord pattern of a wavy belt;
FIG. 4 illustrates the wavy belt of FIG. 3 in a finished state.

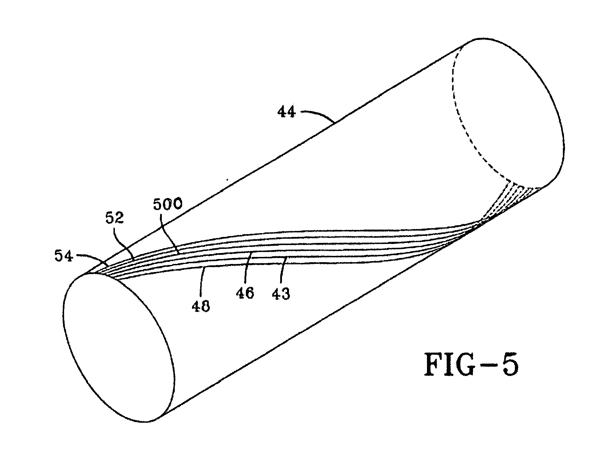

FIG. 5 illustrates the wavy belt being laid up on a tire building drum.

### Detailed Description of an Example Embodiment the Invention

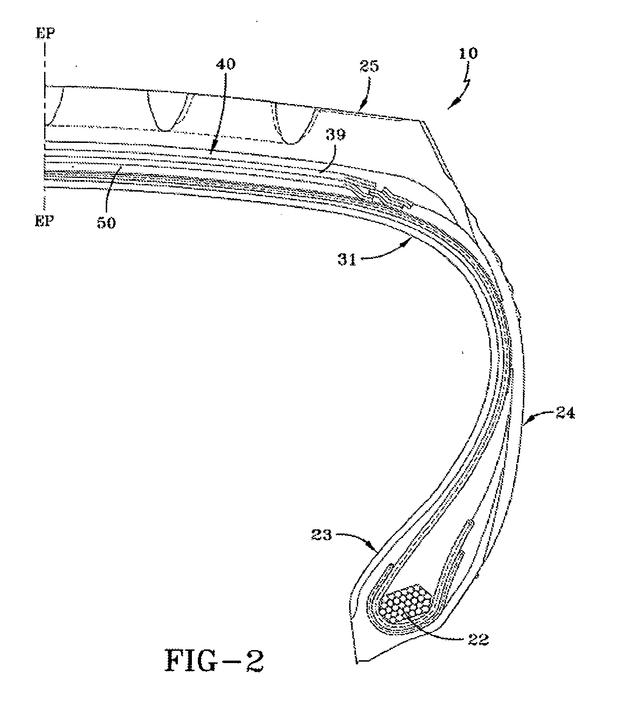

FIG. 2 illustrates a comparative example of a partial cross-section of an exemplary radial tire 10 which includes a bead portion 23 having a bead core 22 embedded therein, a sidewall portion 24 extending radially outward from the bead portion 23, and a substantially cylindrical tread portion 25 extending between radially outer ends of the sidewall portions 24. The tire 10 is reinforced by a carcass 31 toroidally extending from one bead portion 23 to the other bead portion 23 (not shown). The carcass 31 includes at least one carcass ply. The carcass ply is anchored to the bead core and for example, may wrap around each bead core 22 forming turnup portions. A belt structure 40 is arranged between the carcass 31 and the tread portion 25. The belt structure 40, according to an example embodiment of the present invention, comprises one or more belts, wherein at least one belt is a wavy belt layer 39 or a wavy belt structure.

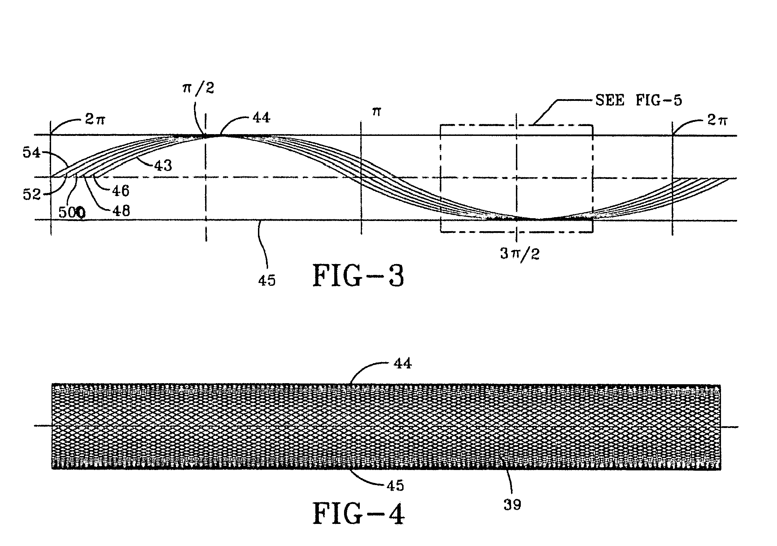

Figure 3 illustrates the tire building drum wherein the outer circumference of the drum has been laid out in a planar fashion. As shown in Figure 3, a first strip 43 of cords is laid up on the drum in an at least substantially sine wave or zigzag wave pattern. The strip is may range in size, but is typically 5 mm to 25 mm, preferably 10 to 15 mm, such as 12 mm in width and formed of a rubberized ribbon of two or more cords. The cord reinforcements may be formed of nylon, polyester or steel. For example, the strip reinforcements may comprise steel wires having a 3x7x0.22 construction. Alternatively, the cords may comprise aramid. Alternatively, the cords may comprise high elongation wire. High elongation wire means having a % elongation at breaking force of at least 3.5%, preferably 4%, more preferably at least 4.5%. The measurements are taken from wire or cords extracted from the cured tire.

In the example, one sine wave (or zigzag wave) is formed on one full drum rotation (2 π radians). The sine wave may also be laid up on the drum in the range of ½ to about 2 waves per drum circumference or wavy belt layer circumference (not shown). In this example the first wavy layer 43 is initially applied to the axial center of the drum or the wavy belt layer 39, and is extended in a primarily circumferential direction in the shape of a continuous sine wave from the axially outer edge 44 of the drum or the wavy belt layer 39 to the opposite axial edge 45. The wavy layer 39 comprises a sine wave shaped or zigzag shaped strip 43. The period of the wave shape may vary from 0.5 to 2 drum circumferences or wavy belt layer circumference, and is preferably 1 or about 1. The period or circumferential length of the sine wave may be selected so that two adjacent strips 43 do not overlap each other after one revolution. The amplitude of the wave varies. For example, the amplitude may vary from 0.25 to 0.5 of a drum axial width, i.e. from 25% to 50% of the axial width of the wavy belt layer 39.

As further shown in FIG. 3, additional strips 46, 48, 500, 52, 54 of cord may be applied to the drum, also starting in the center (or other desired starting point). The strips 46, 48, 500, 52, 54 are initiated at sequential circumferential locations on the same centerline, i.e., indexed circumferentially. The sequential indexing of the strips results in less shoulder buildup of the strips. Figure 4 illustrates a completed sine wave belt layer formed of a plurality of strips laid up in a sine wave pattern. The complete sine wave belt structure 40 results in two layers of cords which are interwoven together and thus are inseparable.

In one example embodiment as shown in Figure 2, the tire may comprise at least one sine wave belt structure or wavy belt layer 39, forming two layers of cord. Preferably, the tire comprises a circumferential belt layer 50 having an angle less then 10 degrees from the circumferential direction. Preferably the circumferential belt layer is spirally wound. The width of the wav belt layer may be 60 to 105 %, preferably 70 to 95%, of the tread arc width of the tire. The width of the circumferential belt layer is preferably less than the sine wave belt layer. The circumferential belt is located radially outward of the wavy belt structure 39. The exemplary tire may also comprise two sine wave belt layers, and a circumferential belt layer preferably positioned therebetween.

## Claims

1. A pneumatic tire having a carcass (31) and a belt structure (40) interposed between a tread (25) and the carcass (31), the belt structure (40) comprising a wavy belt layer (39) having a first and second axially outer edge (44, 45), wherein the wavy belt layer (39) is formed of a strip (43) and shaped in a sine wave pattern or a zigzag wave pattern extending from the first edge to the second edge (44, 45), wherein the tire (10) comprises a circumferential belt layer (50) formed of cords angled at 15 degrees or less relative to the circumferential direction, wherein the amplitude of the strip (43) wound circumferentially in a sine shaped or zigzag shaped manner, forming the wavy belt layer (39) having the sine wave pattern or the zigzag shaped pattern extending from the first edge to the second edge (44, 45), varies within the wavy belt layer (39) between a minimum amplitude and a maximum amplitude, wherein the maximum amplitude defines the first and second axially outer edges (44, 45), and wherein the minimum amplitude is less than the maximum amplitude, **characterized in that** the circumferential belt layer (50) is located radially outward of the wavy belt layer (39) and **in that** the tire is a truck tire.

2. The tire of claim 1 wherein the strip (43) is a reinforced rubber strip (43).

3. The pneumatic tire of claim 1 or 2 wherein the circumferential belt layer (50) has a cord angle of 10 degrees or less with respect to the circumferential direction.

4. The pneumatic tire of claim 3 wherein the circumferential belt layer (50) has a cord angle of 5 degrees or less, preferably 2 degrees or less, with respect to the circumferential direction.

5. The pneumatic tire of at least one of the previous claims wherein the circumferential belt layer (50) is spirally wound.

6. The pneumatic tire of at least one of the previous claims wherein the wavy belt layer (39) has a width of 60 to 105%, preferably 70 to 95%, of the tread arc width of the tire (10).

7. The pneumatic tire of at least one of the previous claims wherein the strip (43) comprises two or more cords, the cords having an elongation at break of 3.5% or more, alternatively 4.5% or more.

8. The pneumatic tire of at least one of the previous claims wherein the cords of the circumferential belt layer (50) are made of nylon, polyester or aramid.

9. The pneumatic tire of at least one of the previous claims wherein the cords of the strip (43) are made of aramid or steel or are hybrid cords.

10. The pneumatic tire of at least one of the previous claims wherein the sine wave pattern has a period in a range of from of 0.5 to 2.0 times the circumference of the wavy belt layer (39), preferably 1 times or about 1 times the circumference of the wavy belt layer (39).

11. The pneumatic tire of at least one of the previous claims wherein the axial width of the circumferential belt layer (50) is less than the axial width of the wavy belt layer (39).

12. The pneumatic tire of at least one of the previous claims wherein the tire (10) comprises a plurality of wavy belt layers (39) and the circumferential belt layer (50) is radially above the wavy belt layers (39).

13. The pneumatic tire of claim 1 wherein the minimum amplitude is less than 95 % of the maximum amplitude or in a range of from 80 % to 99%, alternatively 95% to 90%, of the maximum amplitude.

## Patentansprüche

1. Luftreifen mit einer Karkasse (31) und einer zwischen einer Lauffläche (25) und der Karkasse (31) angeordneten Gürtelstruktur (40), wobei die Gürtelstruktur (40) eine wellenförmige Gürtellage (39) mit einem ersten und einem zweiten axial äußeren Rand (44, 45) umfasst, wobei die wellenförmige Gürtellage (39) aus einem Streifen (43) gebildet und in einem Sinuswellenmuster oder einem Zickzackwellenmuster, das sich von dem ersten Rand zu dem zweiten Rand (44, 45) erstreckt, geformt ist, wobei der Reifen (10) eine umfangsgerichtete Gürtellage (50) umfasst, die aus Korden gebildet ist, die unter 15 Grad oder weniger bezüglich der Umfangsrichtung angewinkelt sind, wobei die Amplitude des Streifens (43), der in Umfangsrichtung auf sinusförmige oder zickzackförmige Weise gewickelt ist, wobei er die wellenförmige Gürtellage (39) formt, die das Sinuswellenmuster oder das zickzackförmige Muster aufweist, das sich von dem ersten Rand zu dem zweiten Rand (44, 45) erstreckt, innerhalb der wellenförmigen Gürtellage (39) zwischen einer minimalen Amplitude und einer maximalen Amplitude variiert, wobei die maximale Amplitude den ersten und zweiten axial äußeren Rand (44, 45) definiert und wobei die minimale Amplitude weniger beträgt als die maximale Amplitude, **dadurch gekennzeichnet, dass** die umfangsgerichtete Gürtellage (50) sich radial auswärts von der wellenförmigen Gürtellage (39) befindet und dass der Reifen ein Lastkraftwagenreifen ist.

2. Reifen nach Anspruch 1, wobei der Streifen (43) ein verstärkter Gummistreifen (43) ist.

3. Luftreifen nach Anspruch 1 oder 2, wobei die umfangsgerichtete Gürtellage (50) einen Kordwinkel von 10 Grad oder weniger bezüglich der Umfangsrichtung aufweist.

4. Luftreifen nach Anspruch 3, wobei die umfangsgerichtete Gürtellage (50) einen Kordwinkel von 5 Grad oder weniger, bevorzugt 2 Grad oder weniger, bezüglich der Umfangsrichtung aufweist.

5. Luftreifen nach mindestens einem der vorgenannten Ansprüche, wobei die umfangsgerichtete Gürtellage (50) spiralförmig gewickelt ist.

6. Luftreifen nach mindestens einem der vorgenannten Ansprüche, wobei die wellenförmige Gürtellage (39) eine Breite von 60 bis 105%, bevorzugt 70 bis 95%, der Laufflächenkonturbreite des Reifens (10) aufweist.

7. Luftreifen nach mindestens einem der vorgenannten Ansprüche, wobei der Streifen (43) zwei oder mehr Korde umfasst, wobei die Korde eine Bruchdehnung von 3,5% oder mehr, alternativ 4,5% oder mehr, aufweisen.

8. Luftreifen nach mindestens einem der vorgenannten Ansprüche, wobei die Korde der umfangsgerichteten Gürtellage (50) aus Nylon, Polyester oder Aramid bestehen.

9. Luftreifen nach mindestens einem der vorgenannten Ansprüche, wobei die Korde des Streifens (43) aus Aramid oder Stahl bestehen oder hybride Korde sind.

10. Luftreifen nach mindestens einem der vorgenannten Ansprüche, wobei das Sinuswellenmuster eine Periode in einem Bereich von 0,5 bis 2,0 Mal der Umfang der wellenförmigen Gürtellage (39), bevorzugt 1 Mal oder ungefähr 1 Mal der Umfang der wellenförmigen Gürtellage (39), aufweist.

11. Luftreifen nach mindestens einem der vorgenannten Ansprüche, wobei die axiale Breite der umfangsgerichteten Gürtellage (50) weniger als die axiale Breite der wellenförmigen Gürtellage (39) beträgt.

12. Luftreifen nach mindestens einem der vorgenannten Ansprüche, wobei der Reifen (10) eine Vielzahl wellenförmiger Gürtellagen (39) umfasst und die umfangsgerichtete Gürtellage (50) sich radial über den wellenförmigen Gürtellagen (39) befindet.

13. Luftreifen nach Anspruch 1, wobei die minimale Amplitude weniger als 95% der maximalen Amplitude beträgt oder in einem Bereich von 80% bis 99%, alternativ 95% bis 90%, der maximalen Amplitude liegt.

## Revendications

1. Bandage pneumatique possédant une carcasse (31) et une structure de ceinture (40) intercalée entre une bande de roulement (25) et la carcasse (31), la structure de ceinture (40) comprenant une couche de ceinture ondulée (39) possédant un premier et un deuxième bord externe en direction axiale (40, 45), dans lequel la couche de ceinture ondulée (39) est constituée d'une bande (43) et étant façonnée sous la forme d'un motif d'onde sinusoïdale ou sous la forme d'un motif d'onde en zigzag s'étendant à partir du premier bord jusqu'au deuxième bord (40, 45), dans lequel le bandage pneumatique (10) comprend une couche de ceinture circonférentielle (50) constituée par des câblés formant un angle de 15° ou moins par rapport à la direction circonférentielle, dans lequel l'amplitude de la bande (43) enroulée en direction circonférentielle d'une manière à configuration sinusoïdale ou à configuration en zigzag, formant la couche de ceinture ondulée (39) possédant le motif d'onde sinusoïdale ou le motif d'onde en zigzag s'étendant à partir du premier bord jusqu'au deuxième bord (40, 45), varie au sein de la couche de ceinture ondulée (39) entre une amplitude minimale et une amplitude maximale, dans lequel l'amplitude maximale définit le premier et le deuxième bord externe en direction axiale (44, 45), et dans lequel l'amplitude minimale est inférieure à l'amplitude maximale, **caractérisé en ce que** la couche de ceinture circonférentielle (50) est disposée en direction radiale à l'extérieur de la couche de ceinture ondulée (39) et **en ce que** le bandage pneumatique est un bandage pneumatique pour camion.

2. Bandage pneumatique selon la revendication 1, dans lequel la bande (43) est une bande de caoutchouc renforcée (43).

3. Bandage pneumatique selon la revendication 1 ou 2, dans lequel la couche de ceinture circonférentielle (50) possède un angle de câblé de 10° ou moins par rapport à la direction circonférentielle.

4. Bandage pneumatique selon la revendication 3, dans lequel la couche de ceinture circonférentielle (50) possède un angle de câblé de 5° ou moins, de préférence de 2° ou moins, par rapport à la direction circonférentielle.

5. Bandage pneumatique selon au moins une des revendications précédentes, dans lequel la couche de ceinture circonférentielle (50) est enroulée en spirale.

6. Bandage pneumatique selon au moins une des revendications précédentes, dans lequel la couche de ceinture ondulée (39) possède une largeur qui représente de 60 à 105 %, de préférence de 70 à 95 % de la largeur d'arc de bande de roulement du bandage pneumatique (10).

7. Bandage pneumatique selon au moins une des revendications précédentes, dans lequel la bande (43) comprend deux câblés ou plus, les câblés possédant un allongement à la rupture de 3,5 % ou plus, en variante de 4,5 % ou plus.

8. Bandage pneumatique selon au moins une des revendications précédentes, dans lequel les câblés de la couche de ceinture circonférentielle (50) sont constitués de nylon, de polyester ou d'aramide.

9. Bandage pneumatique selon au moins une des revendications précédentes, dans lequel les câblés de la bande (43) sont constitués d'aramide ou d'acier ou représentent des câblés hybrides.

10. Bandage pneumatique selon au moins une des revendications précédentes, dans lequel le motif d'ondulation sinusoïdale possède une période dans la plage de 0,5 à 2,0 fois la circonférence de la couche de ceinture ondulée (39), de préférence 1 fois ou environ 1 fois la circonférence de la couche de ceinture ondulée (39).

11. Bandage pneumatique selon au moins une des revendications précédentes, dans lequel la largeur axiale de la couche de ceinture circonférentielle (50) est inférieure à la largeur axiale de la couche de ceinture ondulée (39).

12. Bandage pneumatique selon au moins une des revendications précédentes, dans lequel le bandage pneumatique (10) comprend plusieurs couches de ceinture ondulées (39) et la couche de ceinture circonférentielle (50) est disposée en position radiale au-dessus des couches de ceinture ondulées (39).

13. Bandage pneumatique selon la revendication 1, dans lequel l'amplitude minimale est inférieure à 95 % de l'amplitude maximale ou dans la plage de 80 % à 99 %, en variante de 95 % à 90 % de l'amplitude maximale.
